# EUROPEAN PATENT SPECIFICATION

(11) **EP 1 103 903 B1**
(45) Date of publication and mention of the grant of the patent: **02.05.2012**
(21) Application number: 00310443.7
(22) Date of filing: 24.11.2000
(51) Int. Cl.: G06F 17/30

(54) **Document production system for capturing web page content**
Dokumentproduktionssystem um Webseiteninhalt zu erfassen
Système de production de documents pour saisir du contenu de pages web

(30) Priority: 29.11.1999 US 450801; 02.02.2000 US 496722
(43) Date of publication of application: 30.05.2001
(73) Proprietor: Xerox Corporation, Rochester, New York 14644 (US)
(72) Inventor: Simchik, Andrew D., Rochester, New York 14623 (US); Perry, Thomas J., Pittsford, New York 14534 (US); Rzepkowski, Kristinn R., Rochester, New York 14622 (US)
(74) Representative: Skone James, Robert Edmund

(56) References cited:
- GB-A- 2 328 300
- DOMEL P: "WebMap: a graphical hypertext navigation tool" COMPUTER NETWORKS AND ISDN SYSTEMS, NORTH HOLLAND PUBLISHING. AMSTERDAM, NL, vol. 28, no. 1, 1 December 1995 (1995-12-01), pages 85-97, XP004001214 ISSN: 0169-7552
- AYERS ET AL: "Using Graphic History in Browsing the World Wide Web" INTERNATIONAL WORLD WIDE WEB CONFERENCE, XX, XX, 1 December 1995 (1995-12-01), pages 451-459, XP002082850

## Description

The present invention relates to document production systems, and more particularly relates to printing systems for retrieving and inserting content from a network into a document for subsequent printing by the printing system.

The advent of the 'information super highway' or Internet has rapidly increased awareness and acceptance of the Internet as a resource for acquiring content. Hence, the Internet is rapidly replacing more traditional methods for obtaining information, such as books, journals, newspapers, magazines and even television.

The Internet is typically accessed by the use of a web browser, which provides a graphical user interface on a client machine. The web browser is configured for communicating with one or more web servers. If a user wishes to obtain content from a web page at one of the web servers, the user typically initiates a series of manual steps to capture the web page and then print the web page with a suitable printer. For example, the web browser resident on the client machine can capture a web page, which is typically created using Hypertext Markup Language (HTML), and then converts the page into a page description language (PDL) file representative of the page. The PDL file is generally not a readily viewable file, but rather is intended to be sent to a printer that employs appropriate software and hardware for printing the PDL file. If the user desires to acquire multiple web pages, the user must individually capture each web page, and then forward each page individually to the printer. Each web page may include multiple text and graphic files that must each be processed prior to printing. This is a relatively time consuming and manually intensive task.

Furthermore, since the typical web page generally includes content that is frequently updated, the user may need to access and print the web page contemporaneously with the time of use. More specifically, if a user wishes to acquire the most recent content from a web page, the user typically cannot rely upon a web page printed at a prior date. Consequently, the user may need to access the web page multiple times in order to ensure that the most updated content is retrieved.

The web pages typically cannot be batch processed or collected when in the capture environment (e.g., when browsing). More specifically, web pages generally are only captured individually, and require the use of multiple applications and multiple file conversions to capture a single web page. This task is time consuming and requires returning multiple times to the capture environment in order to acquire multiple pages.

"Footprints: History-Rich Tools for Information Foraging", Wexelblat et al, CHI '99 Conference. Proceedings Human Factors in Computing Systems, Pittsburgh, PA, CHI Conference Proceedings, Human Factors in Computing Systems, New York, NY: ACM, US, May 1999 (1999-05-15), pages 270-277, describes tools for applying interaction history theory to navigation in a complex information space. The tools use a browsing history to contextualize Web pages that the user is viewing. The problem the present invention is concerned with, however, is the retrieval of pages such as web pages from a network.

GB-A-2328300 describes methods for enabling a user to select a web page and then print some or all of the linked pages which are related to that page without having first to invoke the link to pages. The drawback of this is that the user does not know enough about the linked pages when he issues the print command.

Domel P: "WebMap: a graphical hypertext navigation tool", Computer Networks and ISDN Systems, North Holland Publishing, Amsterdam, NL, Vol. 28, No. 1, 1 December 1995 (1995-12-01), pages 85-97, describes a method to help to retrieve documents and web pages visited in the past. Similar techniques are described in Ayers et al: "Using Graphic History in Browsing the World Wide Web", International World Wide Web Conference, XX, XX, 1 December 1995 (1995-12-01), pages 451-459.

EP0851367 discloses a method and apparatus for generating printed copies of internet pages from the worldwide web, utilising a data processing system, a plurality of internet page record locators, and a printer, in accordance with operator-selected formatting, characterised by the data processing implemented steps of (a) receiving operator input for selection for printing of particular internet pages which are associated with corresponding particular ones of said plurality of internet page record locators; (b) retrieving said particular internet pages utilizing said corresponding particular ones of said plurality of internet page record locators; (c) receiving operator input for operator selected format requirements; (d) utilising said printer for printing said particular internet pages in accordance with said operator selected format requirements.

The present invention provides a method for interactively acquiring a plurality of pages from a network, said method comprising the steps of
launching a browser for browsing the network;
providing a preview window for collecting pages in the network while browsing the network and a user interface element in said preview window for selecting pages browsed on the network, characterized by
selecting some of the pages browsed from the network during a browsing session by actuating said user interface element, and
inserting each of the selected pages in said preview window.

According to an embodiment, the method includes the steps of providing a document creation algorithm, and importing the content of the pages in the user interface element into the document creation algorithm. A production facility can be used to translate the pages into an image file representative of the pages prior to placement within the window.

The pages are then inserted or placed within the user interface element in an interactive manner through the user interface element. During this interactive capture of web pages, at least the content acquisition facility establishes a capture environment, and the method of the invention acquires the page when in the capture environment without terminating a communication link established between the client machine, which can include the content acquisition facility, and the network. The content acquisition facility can capture multiple web pages when in the capture environment.

In embodiments the method may further comprise dynamically creating a URL list having one or more uniform resource locators (URLs) associated with one or more pages in a network. The method includes the steps of launching a browser for browsing the network, generating a user interface element with a URL collection facility, acquiring the URL corresponding to a selected page in the network during browsing, and inserting the URL in the user interface element to create the URL list.

According to one embodiment, the step of launching the web browser establishes a communication link with the network, and the URL list is assembled without terminating the communication link. Once the list is performed, the URLs in the URL list can be re-ordered or changed.

According to another embodiment, the method includes the steps of importing the URL list into a document generated by a document creation algorithm, dynamically and automatically retrieving the page corresponding to the URL in the URL list, and importing content associated with the page into the document. A production facility can be employed to translate the page into an image file corresponding to the page prior to importing the content into the document.

According to still another aspect, the user interface element can be a window that includes one or more secondary user interface elements for inserting the URL into the URL list.

Some examples of methods according to the present invention will now be described with reference to the accompanying drawings, in which:-
Figure 1 is a schematic block diagram of a networked printing system;
Figures 2 and 3 are schematic illustrations of exemplary user interface elements corresponding to the content acquisition facility of Figure 1;
Figure 4 is a schematic illustration of an exemplary user interface element corresponding to a document generated by the document creation algorithm of Figure 1;
Figure 5 is a schematic flow-chart diagram illustrating the operation of the image reproduction system of Figure 1 for capturing multiple web pages in the capture environment;
Figures 6 and 7 are schematic illustrations of exemplary user interface elements corresponding to the URL collection facility of Figure 1; and.
Figure 8 is a schematic flow-chart diagram illustrating the operation of the printing system of Figure 1 for collecting a number of URLs and for inserting the URLs in a document.

An integrated printing system that provides for capturing or retrieving content in multiple pages from a network (such as the Internet), and then converting the content in the pages into a format suitable for integration with a document generated by a document creation algorithm. As used herein, the term document creation algorithm is intended to include any application program, script or function for creating or displaying a document. The pages can be captured in batch form in a single capture session if desired, for subsequent conversion and importation into the document. The present invention further provides for capturing and inserting multiple links or page addresses in the document, and then later dynamically and automatically retrieving content corresponding to those links for integration in the document.

Fiugre 1 illustrates a printing system 10 that includes a client machine 12 coupled to a network 14 and to a printing module 16 by any suitable connection. The illustrated client machine 12 can be any IBM compatible personal computer or similar computing apparatus that can be coupled in a network configuration with the network 14, and coupled via any suitable communication link, such as a network link, to the printing module 16. The client machine 12 can also form part of an additional network, which in turn communicates with the network 14. The client machine 12 can further contain various forms of hardware and software according to known distributed processing techniques. The client machine can also be a pager, cellular telephone, personal data assistant (PDA), and the like.

The illustrated network 14 can employ one or more servers, schematically illustrated as servers 15, that are disposed in communication with each other in selected network configuration. The servers 15 can be arranged in any conventional manner which would be obvious to those of ordinary skill in the art. The network 14 can be coupled with the client machine 12 to form an overall network, such as a LAN or a WAN, and preferably is configured in a specialty client-server relationship called the Internet. For purposes of clarity, we refer below to the network 14 as the web 14, the servers 15 as the web servers 15, and the network page as a web page. Those of ordinary skill in the art will readily recognize that the teachings of the invention also apply to all forms of networks, including but not limited to intranets, extranets, IP networks, and the like.

The illustrated client machine 12 can communicate with the web 14 utilizing known functionalities, such as the functionality provided by the hypertext transfer protocol (HTTP). The web 14 includes web servers 15 that all support the TCP/IP protocol suite, and which are addressable to client machines via universal resource locators (URLs). In a conventional web connection, the illustrated client machine 12 employs a browser, such as the web browser 24, which establishes the connection with the web 14 to present information to a system user through the user interface 18. The web servers 15 in the web 14 execute corresponding server software which presents information to the client machine 12 in the form of HTTP responses or packets. The HTTP responses correspond to web pages constructed from a Hypertext Markup Language (HTML), or other server-generated data.

A page designed to be accessed over the web is called a web page. A web page can include any selected content, such as media content including text, graphics, images, and even multi-media objects such as sound recordings or moving video clips, as well as executable content such as software code. In conventional systems, a web page if it contains content of multiple types is usually constructed by loading several separate files, such as a hypertext file, a graphic image file or a sound file. For example, in conventional systems, the client machine 12 will receive the web page from the web 14 in the form of multiple files, each file containing different content. Each web page has a unique address formatted as a URL. When the client machine 12 forwards a request to the web 14 for a web page, the web 14 transmits the web page, which may include multiple files forwarded separately, to the client machine 12. The web browser 24 communicates with the web 14 over a communication link, which can typically be a local area network connection, a wide area connection, a connection over telephone lines, a wireless connection, cable connection, and the like, or a combination thereof.

The illustrated printing module 16 can be any image reproduction system, examples of which include electrophotographic, electrostatic, ionographic, and other types of image forming or reproduction systems, which are adapted to capture, store and/or reproduce image data associated with a particular object, such as a document. The system of the present invention is intended to be implemented in a variety of environments, such as in any of the foregoing types of image reproduction systems, and are intended to include any of the DocuTech^{™} series of printers from Xerox Corporation.

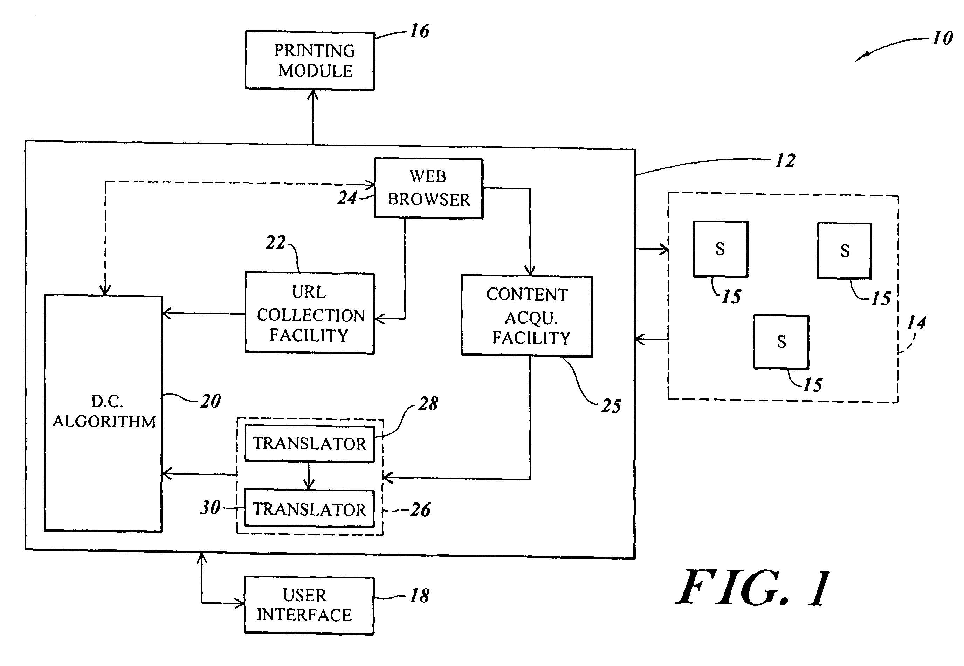

With reference to Figure 1, the illustrated client machine 12 includes a document creation algorithm 20, which can be any software application or algorithm adapted or configured to assemble or create a document having selected content, such as text or images. Examples of suitable document creation algorithms suitable for use with the present invention include the DigiPath suite of software manufactured and sold by Xerox Corporation, and more particularly the Document Scan and Makeready application which forms part of the DigiPath software suite. Other types of document creation or assembly applications suitable for use with the present invention include Adobe Acrobat 4.0, as well as other software which can be employed to create documents suitable for display by the illustrated client machine 12, or suitable for creation and forwarding to the printing module 16 for printing.

The illustrated document creation algorithm 20 is in communication with a URL collection facility 22. The URL collection facility 22 is adapted to collect or create a listing of network links (e.g., addresses corresponding to web pages) which can be inserted into a document created by the document creation algorithm 20. The URL collection facility 22 is an optional component and is schematically illustrated as being separate from the web browser 24, the content acquisition stage 25, and the production facility 26. Those of ordinary skill in the art will readily recognize that the URL collection facility can form part of any of the components or facilities contained in the client machine, or can be located remote from the client machine 12.

The illustrated URL collection facility 22 communicates with the web browser 24, which is commercially available and is intended to include but is not limited to Netscape Navigator™, NCSA Mosaic, and Internet Explorer™. The illustrated web browser 24 further communicates with a content acquisition facility 25 for capturing or acquiring multiple web pages. The content acquisition facility 25 in turn is in communication with the production agent or facility 26, which can include one or more translator facilities such as translator facilities 28 and 30. The translator facilities 28 and 30 are intended to translate or interpret the web pages captured by the content acquisition facility 25 from the web 14, as described below. The production facility 26 communicates with a display and/or a keyboard, schematically illustrated as the user interface 18.

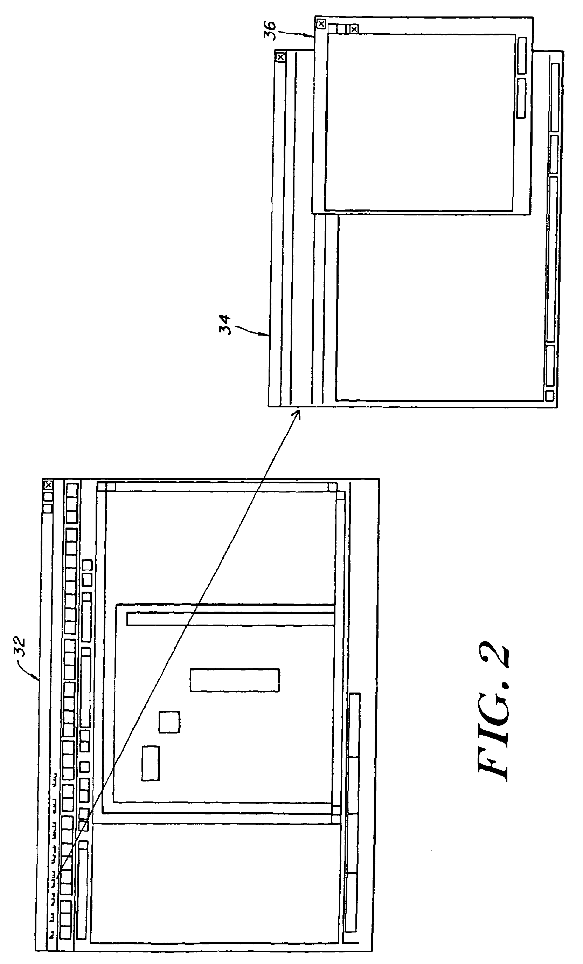

Figures 2 through 4 show user interface elements employed by the client machine 12 when collecting web pages for assembly into a document created by the document creation algorithm 20 according to the teachings of the present invention. The system user can employ the present invention to capture web page content. With reference to FIG. 2, the user can create or assemble a document with the document creation algorithm, such as the Document Scan and Makeready application portion of the DigiPath software suite, and then from this algorithm generate a user interface element or window 32. The window 32 illustrates the formation of a document 40. The window 32 can be displayed on the user interface 18. When assembling the document, the user can employ the content acquisition facility 25 to acquire content from a web page, or acquire a list of URLs with the URL collection facility 22, for placement within the document 40. According to one practice, if the user desires to acquire web page content, the client machine 12 runs or launches the web browser 24, which creates a user interface element or window 34 on the user interface 18. The content acquisition facility 22, which can be configured as a plug-in for the web browser 24, generates the preview window 36 for collecting web pages.

The client machine 12 launches the web browser 24, which in turn sends a user request to one of the web servers 15 of the web 14. In particular, the web browser 24 employs a URL which defines a particular address of a web page on one of the web servers 15. The URL is a standard way of referencing a particular object on the web 14. It was primarily developed to address the need to have a uniform method for locating various files and data objects on the Internet. A URL has a defined format, which typically includes method://host/path, where the method is the protocol used to access the data body, the host is the fully qualified host name of the web server containing the data, and the path is any method specific data used to determine which data object on the web server is being referenced. Hence, the web browser 24 by employing the URL can point to a file in a particular directory located on a particular web server in the web 14. The web 14 then returns a web page to the client machine 12. The web browser 24 can be adapted to receive the web page, which typically is encoded in HTML. The web browser 24 evaluates the HTML data (content) associated with the web page to determine if there are any hyper-link statements in the HTML data which would require subsequent browser requests, which would then be initiated by the web browser 24. The web browser 24 then transfers the web page to the content acquisition facility 25 for placement within the preview or collection window 36.

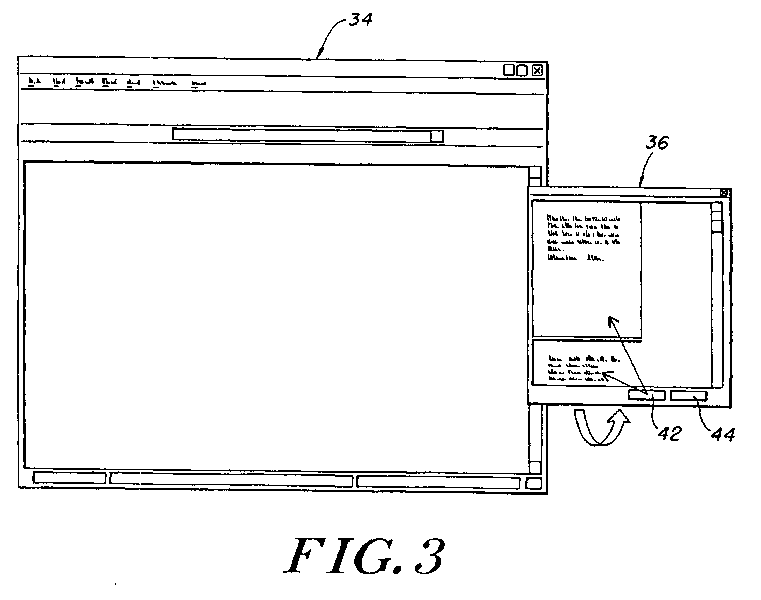

With reference to Figure 3, after the user selects a web page, a user interface element or button 42 can be actuated or 'clicked' with a control instrument, such as a mouse, to capture and place an image of the web page in the preview window 36. The content acquisition facility 25 can generate a thumbnail image of each selected web page and place the image within the window. The user then selects another web page, and inserts the second web page image into the preview window. The user repeats the process as many times as necessary to collect multiple web pages and associated content. The user can end or terminate the capture or browsing session from the capture environment (e.g., preview window 36) by actuating the close button 44 in the preview window 36. The close button 44 terminates or ends the web page capture session.

The content acquisition facility 25 in connection with the production facility 26 can capture the web page in a format suitable for editing and printing. Moreover, the thumbnail images of each web page can be reordered, or a selected image removed from the window 36. Hence, the preview window 36 affords the system user the ability to manipulate the images to create a selected image order and number for insertion into the document 40. The re-ordering of the web pages and the deletion and/or addition of web pages can be performed without leaving the capture environment or session afforded by the preview window 36 and the web browser 24, and without the need for running or executing several different applications to collect the web pages.

The captured web pages placed within the preview window 36 or web pages to be captured by the content acquisition facility 25 can be batch processed by the production facility 26 to convert the web pages into image files for importation or placement within the document 40 generated by the document creation algorithm 20. The illustrated production facility 26 can employ a first translator 28 that converts the HTML data associated with the web page into a page description language (PDL) file representative of the web page. For example, the translator 28 can employ Postscript® from Adobe Systems to translate or convert the web page into the PDL file. Those of ordinary skill will also recognize that other types of page description languages can be employed to convert HTML data associated with the web page into a PDL file. Examples of such language types include Envoy, PDF, and PCL. An example of a PDF format language suitable for use with the present invention includes Adobe Acrobat 4.0 from Adobe Systems. In conventional client-server configurations, the translated PDL file is generally directly transferred to a printer, such as the printing module 16, which can contain appropriate software and hardware drivers for converting the PDL file to an appropriate format for printing. Hence, the PDL file is generally not employed or incorporated into a document.

According to the present invention, the production facility 26 includes a second translator 30 for translating the PDL file into an image file containing image data representative of the web page. The translator 30 can automatically translate the PDL file into an image file representative of the captured web pages, which is capable of being directly imported into the document 40 generated by the document creation algorithm 20. Furthermore, the production facility 26 and the document creation algorithm 20 can be tightly integrated such that the image file generated by the translator 30 is directly integrated into the document. Those of ordinary skill will readily recognize that the first translator 28 can form part of the web browser 24 and that the production facility 26 can be configured as a plug-in for the web browser 24. The image file generated by the production facility 26 can be a Tagged Image File Format (TIFF) file, JPEG file, or any other human readable file.

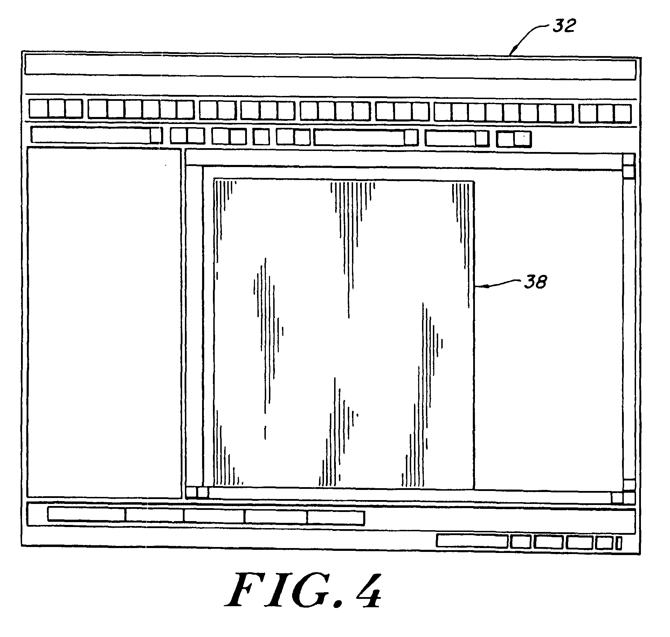

The image file generated by the production facility 26 can be displayed by the user interface 18, or directly imported into the document generated by the document creation algorithm 20. For example, with reference to Figure 4, the web pages within the preview window 36 and translated by the production facility 26 are imported into the document 40 in any suitable form, such as a page 38 for insertion therein. Once the document is completed by the document creation algorithm, the document can be forwarded directly to the printing module 16 for subsequent printing. Alternatively, the translated web pages can be stored in a file for later use.

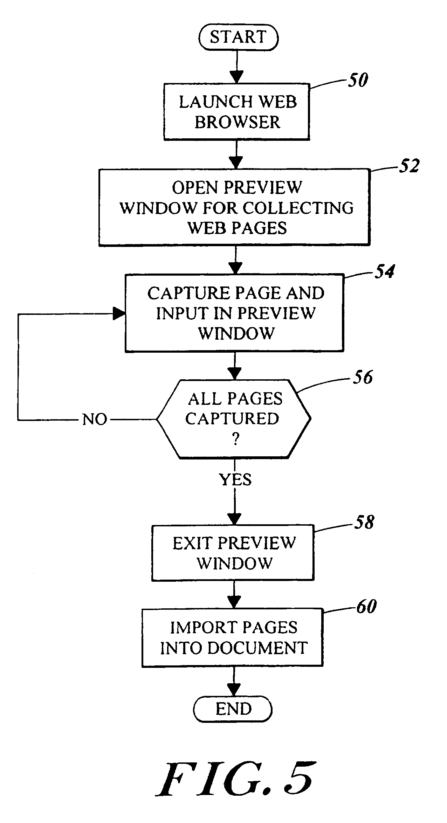

In operation, the web browser 24, the content acquisition facility 25 and/or the production agent 26 can be employed to retrieve a web page, place the web page within a preview window 36, and then insert the web page into a document. With reference to Figure 5, the user creates a document with the document creation algorithm, and then launches a web browser (step 50) to locate or select a web page. The web browser 24 can employ a URL to access a web page in the web 14, which in turn retrieves the web page and transfers the web page to the web browser 24. The content acquisition facility 25 then launches or generates the preview or collection window 36 (step 52) for collecting one or more web pages. The content acquisition facility 25 receives the pages from the web browser and inserts the web page in the window by clicking the add page button 42 (step 54). Prior to inserting the page in the window 36, the production facility 26 translates the web page into an image file (thumbnail image) that is then displayed in the window. If the user desires to insert additional web pages in the window 36 to create a selected job, then the user browses to another page, and then inserts the page in the window 36 (step 54). The user proceeds to insert web pages until all selected content is captured. The web pages can be inserted into the window 36 in the form of uneditable thumbnails, which are images of the entire web page. The user then terminates or ends the capture session by clicking the close button 44 to close the window. The web pages can then be imported into the document generated by the document creation algorithm 20 (step 60) at a defined location.

The user can then create a print job via the user interface 18 and forward the job (which contains the document) to the printing module 16. The printing module 16 then prints the document. The image file created by the production agent 26 is of the type that can be directly displayed by the user interface in human readable form, or can be incorporated directly into the document created by the document creation algorithm 20 for subsequent editing, altering and printing.

A significant advantage of the content acquisition facility 25 of the present invention is that the facility can capture multiple web pages in a single interactive capture session without necessitating switching between multiple applications. Hence, the user can interactively capture multiple web pages while browsing. The ability to capture multiple pages in a single interactive environment reduces the time associated with capturing content in the web pages (reduced time on task) and then placing the content in a document. Rather, all desired pages can first be captured in the window 36, and then the collection of pages can be imported directly into the document. This methodology avoids the need for capturing a single page, attempting to import content associated with the single page into a document or into another application, and then repeating the entire process.

Another significant advantage of the present invention is that the pages need not necessarily be web pages. Instead, the network can be some other network, and the page can be configured in a different file format, such as PDF and the like.

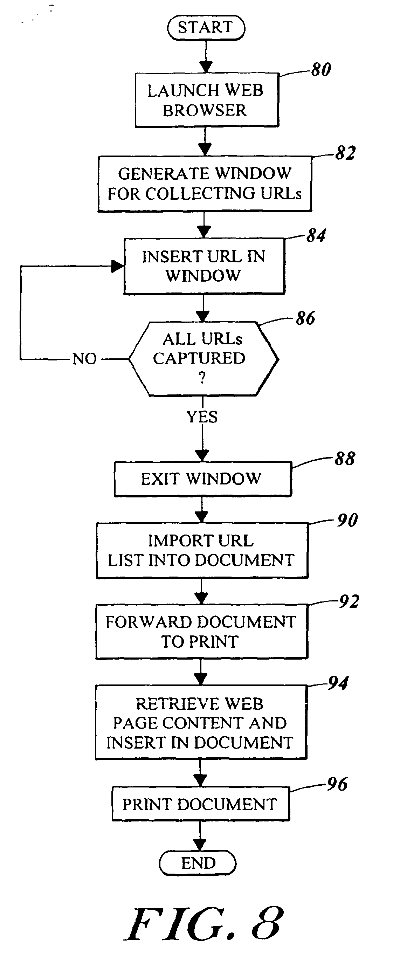

In addition, the system provides for the collecting, assembling, or constructing a list of page addresses or URLs (e.g., links) in an interactive, dynamic manner, without leaving the capture environment. Specifically, the present invention provides for the ability to insert one or more links into a document created by the document creation algorithm 20. The links inserted into the document provide for the automatic and dynamic updating, retrieval, and implementation of data for incorporation into a document created by the document creation algorithm. Hence, a user need not manually update a document with content contained on a page, such as a web page, of a network, where the content is dynamically changing. According to the present invention, the user need only provide the link within the document corresponding to the address or location of the page containing the content. The user can collect or assemble the URLs while browsing by simply actuating one or more simple user interface elements during the capture or collection process. The collection of URLs will be described below in connection with Figures 1 and 6-8.

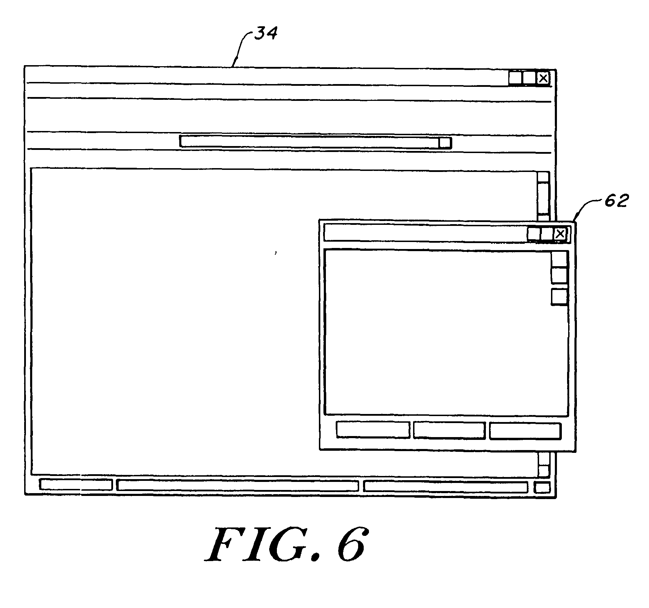

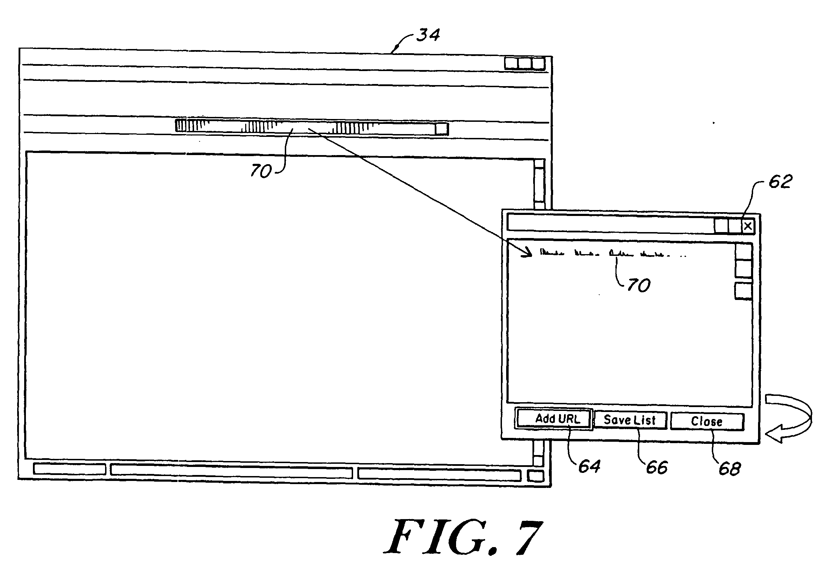

With reference to Figure 1, the system user through the user interface 18 can initiate the collection of URLs by launching the web browser 24. The web browser operates in connection with the URL collection facility 22 which can be configured as a plug-in for the browser. Figures 6 and 7 show exemplary user interface elements or windows that can be employed to collect the URLs according to the teachings of the present invention. Specifically, the client machine 12 can launch the web browser 24. The web browser can create the window 34, and the collection facility can create the window 62. The window 34 is a typical web browser window. The window 62 can include one or more user interface elements that are configured as buttons. According to one practice, the window 62 can employ three buttons, including the add URL button 64, the save list button 66, and the close button 68. Those of ordinary skill will readily recognize that any number and arrangement of user interface elements can be employed.

The user can access the appropriate site or page on the web 14, and then capture or collect the address or URL. The URL 70 can be collected and assembled into a list by actuating or clicking the add URL button 64. Once actuated, the URL collection facility 22 inserts or places the URL 70 into the window 62, as illustrated. The URL collection facility further stores information about the displayed fragments in order to later reconstruct pages called from index frames. The user can then access another page in the web 14, and if a desired URL is located, can be added to the list by actuating the add URL button 64. The user can assemble a list of URLs by locating the appropriate web page, and then employing the URL collection facility 22 to insert the URL into an interactive window 62. The user can hence construct the URL list while working within the browser or capture environment.

The user can manipulate the URLs 70 in the list to perform a number of selected functions. For example, the user can reorder the URL list in the window 62, or can add or delete entries in the URL list as desired.

When the user finishes assembling the list, the user can save the URL list by actuating the save list button 66. The URL collection facility 22 can either save the list by importing the list directly into a document created by the document creation algorithm 20, or can save the list directly to memory in the client machine or at some other location. Once saved, the list can be later imported into the document by accessing the list in memory. The user may also close or terminate the window 62 by actuating the close button 68.

The URL collection facility 22 is employed to assemble a URL list, which can then be imported into the document. The document with the inserted URL links can then be forwarded to the printing module 16 for printing. However, prior to printing, the system 10 launches the web browser 24, dynamically and automatically retrieves the web page corresponding to the URL, and then converts the web page with the production facility 26 into an image file. The image file is then inserted into the document. The illustrated image reproduction system 10 allows a user to insert a URL indicative of a selected web page into a document. By doing so, the user ensures that at the time of printing, the most updated content in the web page can be automatically captured and inserted into the document. This contemporaneous capture of web page content allows the user to dynamically, automatically insert updated or changing web page content into a document when most needed, that is, at the time of printing. The capture and insertion of the web page content into the document is dynamic since a URL list can be created by the URL collection facility 22 and inserted into the document, and then at the time of printing the system automatically retrieves the web page content associated with the URL without requiring the user to retrieve each web page, separate or independent of the printing process, and then inserting some of the content, if possible, into the document.

In operation, the user can create or generate a URL list containing one or more URLs by entering selected commands into the user interface to initiate the URL collection process. Initially, the user can launch the web browser either from the document creation algorithm or separately therefrom. The web browser 24 is launched (step 80), and the user identifies or accesses a selected web page in the web 14 using the browse window 34. Simultaneously, the URL collection facility 22, which can be configured as a plug-in for the web browser 24, generates or launches a URL collection window 62 (step 82). The collection window 62 employs buttons 64-68 that enable the user to collect or assemble the URL list. For example, the user accesses a selected web page in the web 14, and then actuates the add URL button 64 in the window 62. The URL collection facility 22 then inserts the URL corresponding to the web page into the window 62 (84). The user then accesses another web page with the web browser 24, and then adds another URL to the list in the window 62. The user repeats this process until the list is complete (step 86). The user can then save the URL list by importing the list directly into the document generated by the document creation algorithm 20, or can save the URL list into a selected file (steps 88 and 90). The user can then complete the document or job, and then forward the job to the printing module for printing (step 92).

When the job is forwarded for printing, the promoting system 10 dynamically and automatically retrieves the web page content associated with the URL and imports this content into the document. For example, the system launches the web browser 24 and retrieves the web page corresponding to the URL. The web page is then converted into an image file by the production facility 26, and then inserted into the document (step 94). The document, which now contains content associated with the web page, is printed by the printing module 16 (step 96).

The URL collection facility 22 generates and/or inserts a URL list into a document in order to allow content from a web page associated with the URL to be incorporated into the document at the appropriate time. For example, the URL collection facility 22 provides for the ability to create a URL list and then insert this list into a document to ensure that updated web page content corresponding to the URL is provided at the appropriate time. This methodology provides for an easy to use system for dynamically inserting content from the web 14 into a document.

A significant advantage is that it provides for the ability to interactively create a URL list without terminating or interrupting the browsing activity of the web browser 24. The URL list can then be imported into a document. The system then dynamically and automatically retrieves the web page content associated with the URL list at the time of printing, or at any other appropriate time.

## Claims

1. A method for interactively acquiring a plurality of pages from a network, said method comprising the steps of
launching a browser for browsing the network;
providing (52) a preview window for collecting pages in the network while browsing the network and a user interface element in said preview window for selecting pages browsed on the network, **characterized by**
selecting (54) some of the pages browsed from the network during a browsing session by actuating said user interface element, and
inserting (54) each of the selected pages in said preview window.

2. The method of claim 1, further comprising the steps of
providing a document creation algorithm, and
importing (60) the content of the pages in the preview window of said user interface element into a document created by said document creation algorithm.

3. A method according to claim 2, further comprising printing the document.

4. The method of any of the preceding claims, further comprising the step of translating said pages into image files representative of the content of said pages with a production facility prior to placement within said preview window.

5. The method according to claim 1, further comprising dynamically creating a URL list having one or more uniform resource locators (URLs) associated with one or more pages from a network, and including the steps of
a) generating (82) a second user interface element with a URL collection facility,
b) acquiring a URL corresponding to a selected page in the network during browsing, and
c) inserting (84) said URL in said second user interface element to create the URL list.

6. The method of claim 5, further comprising the steps of
importing (90) said URL list into a document generated by a document creation algorithm,
dynamically, automatically retrieving (94) the page corresponding to one of said URLs in said URL list, and
importing content associated with the page into the document.

7. The method of claim 5 or claim 6, wherein acquiring a URL comprises
actuating the second user interface element to insert the URL into the URL list.

8. A computer-readable medium having recorded thereon a computer-readable program comprising code means adapted to perform all the steps of the method of claim 1 when said program is run on a computer.

## Patentansprüche

1. Verfahren zum interaktiven Beziehen einer Vielzahl von Seiten von einem Netzwerk, wobei das Verfahren die folgenden Schritte umfasst:
Starten eines Browsers zum Browsen des Netzwerks;
Bereitstellen (52) eines Vorschau-Fensters zum Sammeln von Seiten in dem Netzwerk beim Browsen des Netzwerks, sowie eines Benutzerschnittstellen-Elementes in dem Vorschau-Fenster zum Auswählen von in dem Netzwerk gebrowsten Seiten,
**gekennzeichnet durch**
Auswählen (54) einiger aus dem Netzwerk während einer Browsing-Sitzung gebrowsten Seiten **durch** Betätigen des Benutzerschnittstellen-Elementes, und
Einfügen (54) jeder der ausgewählten Seiten in das Vorschau-Fenster.

2. Verfahren nach Anspruch 1, das des Weiteren die folgenden Schritte umfasst:
Bereitstellen eines Dokumentenerzeugungs-Algorithmus, und
Importieren (60) des Inhaltes der Seiten in dem Vorschau-Fenster des Benutzerschnittstellen-Elementes in ein durch den Dokumentenerzeugungs-Algorithmus erzeugtes Dokument.

3. Verfahren nach Anspruch 2, das des Weiteren Drucken des Dokumentes umfasst.

4. Verfahren nach einem der vorangehenden Ansprüche, das des Weiteren den Schritt umfasst, in dem die Seiten mit einer Herstellungseinrichtung in Bilddateien übersetzt werden, die repräsentativ für den Inhalt der Seiten sind, bevor sie in dem Vorschau-Fenster angeordnet werden.

5. Verfahren nach Anspruch 1, das des Weiteren dynamisches Erzeugen einer URL-Liste mit einer oder mehreren URL (uniform resource locators) umfasst, die mit einer oder mehreren Seite/n aus einem Netzwerk verknüpft ist/sind, und wobei das Verfahren die folgenden Schritte einschließt:
a) Generieren (82) eines zweiten Benutzerschnittstellen-Elementes mit einer URL-Sammeleinrichtung,
b) Beziehen einer URL, die einer ausgewählten Seite in dem Netzwerk entspricht, beim Browsing, und
c) Einfügen (84) der URL in das zweite Benutzerschnittstellen-Element, um die URL-Liste zu erzeugen.

6. Verfahren nach Anspruch 5, das des Weiteren die folgenden Schritte umfasst:
Importieren (90) der URL-Liste in ein mit einem Dokumentenerzeugungs-Algorithmus generiertes Dokument,
dynamisches automatisches Abrufen (94) der Seite, die der einen der URL in der URL-Liste entspricht, und
Importieren von Inhalt, der mit der Seite verknüpft, in das Dokument.

7. Verfahren nach Anspruch 5 oder 6, wobei Beziehen einer URL umfasst:
Betätigen des zweiten Benutzerschnittstellen-Elementes, um die URL in die URL-Liste einzufügen.

8. Computerlesbares Medium, auf dem ein computerlesbares Programm aufgezeichnet ist, das Codemittel umfasst, die zum Durchführen aller der Schritte des Verfahrens nach Anspruch 1 beim Ausführen des Programms auf einem Computer eingerichtet sind.

## Revendications

1. Procédé permettant d'acquérir de manière interactive une pluralité de pages à partir d'un réseau, ledit procédé comprenant les étapes qui consistent
à lancer un navigateur pour naviguer sur le réseau ;
à fournir (52) une fenêtre de prévisualisation pour collecter les pages dans le réseau lors de la navigation sur le réseau et un élément d'interface utilisateur dans ladite fenêtre de prévisualisation pour sélectionner des pages consultées sur le réseau, **caractérisé par** le fait
de sélectionner (54) certaines des pages consultées à partir du réseau pendant une session de navigation en actionnant ledit élément d'interface utilisateur, et
d'insérer (54) chacune des pages sélectionnées dans ladite fenêtre de prévisualisation.

2. Procédé de la revendication 1, comprenant en outre les étapes qui consistent
à fournir un algorithme de création de document, et
à importer (60) le contenu des pages dans la fenêtre de prévisualisation dudit élément d'interface utilisateur dans un document créé par ledit algorithme de création de document.

3. Procédé selon la revendication 2, comprenant en outre l'impression du document.

4. Procédé de l'une des revendications précédentes, comprenant en outre l'étape qui consiste à convertir, par une unité de production, lesdites pages en fichiers image représentant le contenu desdites pages avant le placement dans ladite fenêtre de prévisualisation.

5. Procédé selon la revendication 1, comprenant en outre la création dynamique d'une liste d'adresses URL ayant une ou plusieurs adresses universelles (URLs) associée(s) à une ou plusieurs pages d'un réseau, et comportant les étapes qui consistent
a) à générer (82) un deuxième élément d'interface utilisateur avec une unité de collecte d'adresses URL,
b) à acquérir une adresse URL correspondant à une page sélectionnée dans le réseau pendant la navigation, et
c) à insérer (84) ladite adresse URL dans ledit deuxième élément d'interface utilisateur pour créer la liste d'adresses URL.

6. Procédé de la revendication 5, comprenant en outre les étapes qui consistent
à importer (90) ladite liste d'adresses URL dans un document généré par un algorithme de création de document,
à récupérer (94) dynamiquement et automatiquement la page correspondant à l'une desdites adresses URL dans ladite liste d'adresses URL, et
à importer un contenu associé à la page dans le document.

7. Procédé de la revendication 5 ou 6, dans lequel l'acquisition d'une adresse URL comprend le fait
d'actionner le deuxième élément d'interface utilisateur pour insérer l'adresse URL dans la liste d'adresses URL.

8. Support lisible par ordinateur sur lequel est enregistré un programme lisible par ordinateur comprenant un moyen de codage adapté pour exécuter toutes les étapes du procédé de la revendication 1 lorsque ledit programme est exécuté sur un ordinateur.
